# EUROPEAN PATENT SPECIFICATION

(11) **EP 0 535 755 B1**
(45) Date of publication and mention of the grant of the patent: **04.12.1996**
(21) Application number: 92203014.3
(22) Date of filing: 01.10.1992
(51) Int. Cl.: A01J 7/00, A01K 13/00

(54) **An implement for cleaning teats of milk-producing animals**
Gerät zum Reinigen der Zitzen von milchgebenden Tieren
Dispositif pour nettoyer les pis des animaux produisant du lait

(30) Priority: 04.10.1991 NL 9101673
(43) Date of publication of application: 07.04.1993
(60) Divisional application: 96201272.0
(73) Proprietor: Texas Industries Inc., Willemstad, Curaçao (AN)
(72) Inventor: van der Lely, Cornelis, Zug (CH)
(74) Representative: Mulder, Herman

(56) References cited:
- EP-A- 0 277 396
- EP-A- 0 323 444
- EP-A- 0 360 354
- EP-A- 0 476 771
- WO-A-89/00378
- FR-A- 2 559 351

## Description

The present application relates to an implement for cleaning teats of milk-producing animals, such as cows, with a robot arm capable of carrying a cleaning device which can be brought under the udder of an animal in order to clean the teats of the animal, means to supply a cleaning liquid to said cleaning device and a computer with means for process control with the aid of which computer the cleaning device can be brought under the animnal's udder and the cleaning process of the teats is performed by supplying the cleaning liquid.

From a hygiene standpoint and with a view to the standards of quality to be imposed on milk, it is important that the animal's udders, or at least their teats, are cleaned prior to milking. In the past this has been done manually. However, when use is made of an implement for milking animals automatically, it is important that an implement is provided for cleaning the teats of these animals. Therefore, an implement as described in the opening paragraph can be applied. Such an implement is known from EP-A1-0 332 231. In this known implement the cleaning device includes a bowl which can be brought into close contact around the animal's udder and is provided with a plurality of spraying nozzles for spraying a cleaning liquid against the animal's udder. In no way the degree of contamination of the animal's udder has been taken into account, while specifically this contamination is important for the duration of the step of cleaning before the milking process will be started. In order to have the capability of cleaning the animal's teats efficiently, the implement for cleaning teats of milk-producing animals is, according to the invention, characterized in that there is provided a sensor capable of establishing the extent of contamination of the cleaning liquid, with the cleaning process of the teats being terminated and the milking process being started when, with the aid of said sensor, it has been established that the contamination of the cleaning liquid has come below a defined level.

Further, from EP-A1-0 476 771, an application pursuant to article 54(3) and (4) EPC, an implement for cleaning teats of milk-producing animals, such as cows, is known, which implement is provided with a robot arm capable of carrying a cleaning device which can be brought under the udder of an animal in order to clean the teats of the animal. In this implement a washing machine is provided for cleaning this cleaning device. This washing machine is provided with a sensor for detecting whether the liquid quality is insufficient. When this is the case, the contaminated liquid can be drained off, whereafter fresh cleaning liquid can be pumped into the washing machine.

In a specific embodiment according to the invention, the cleaning device is provided with cleaning members which are operative in at least two different positions. In particular, the cleaning members can be operating in two positions by rotation of approximately 90 degrees about an axis directed upward. Owing to that the cleaning members are capable of operating in different positions with respect to the teats, an improvement in teat cleaning is achieved. The cleaning members may comprise at least two brushes driven during operation such that a teat is cleaned on two sides by these brushes. So, brushes can be active on both sides of one pair of teats, whilst by the installation of two pairs of brushes the two pairs of teats are cleanable simultaneously on both sides. The brushes are capable of rotating in opposite directions, whilst they are preferably motor-driven and that such that the brushes are movable along a teat from top to bottom. Any dirt adhering to a teat is thus taken downward by the brushes on two sides. Besides, each of the brushes is also rotatable about a substantially horizontal axis. In an exemplary embodiment, the brushes are of different diameters. E.g. the brushes operating in between the two pairs of teats can be smaller in diameter than those operating on the exterior of the pairs of teats. The brushes can be hairy and/or be provided with synthetic fibres. At least one of the pair of cleaning members provided for cleaning a pair of teats can be made up of a plurality of approximately round textile disks. In general, one or several cleaning members are capable of being provided with rotatable textile disks.

Finally, the invention relates to a method of cleaning teats of milk-producing animals, such as cows, whereby cleaning members are automatically connected to the animal's udder, after which these cleaning members perform a rotating movement along the teats, with a sensor measuring the contamination of the cleaning liquid, whereas, when the contamination thereof has come below a defined level, the supply of cleaning liquid is turned off and the teats are dried by means of drying air, whereafter teat cups are connected to the animal's teats and the milking process is performed.

The invention will now further be explained with reference to the exemplary embodiment reflected by the accompanying drawings, wherein:
Figure 1 is a schematic representation of a milking parlour provided with a milking robot, which includes the implement according to the invention;

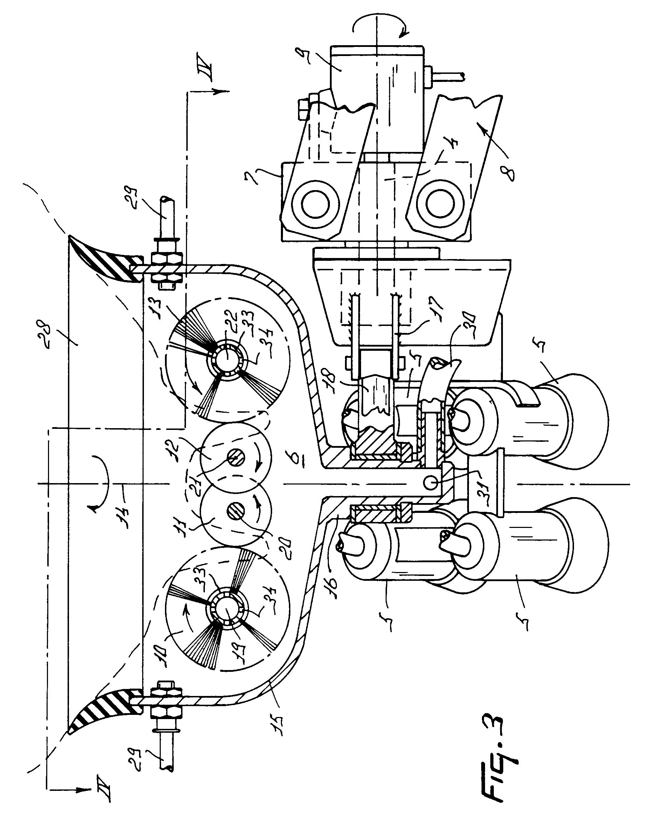

Figure 2 shows in a schematic representation the orientation of the teat cups with respect to the cleaning device and with respect to the robot arm of the milking robot, on which arm the teat cups and the cleaning device are provided;
Figure 3 shows a longitudinal section of the implement according to the invention, and
Figure 4 depicts a top view of the implement according to the invention.

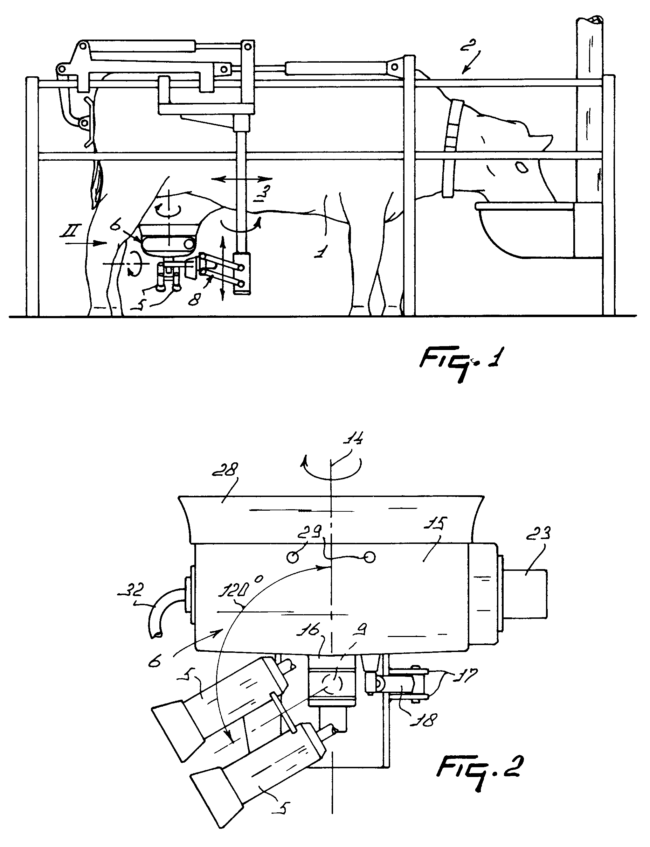

In Figure 1, a cow 1 in milking parlour 2 is depicted, where said milking parlour is provided with a milking robot 3. This milking robot is represented only schematically and hereinafter it will not be described in further detail, since it is no part of the invention. As far as it may be of significance, it is noticed that the milking robot is movable in the longitudinal direction of the milking parlour 2, whilst one or several arms of the milking robot 3 can be swung in a substantially horizontal plane, whilst a last robot arm 4 acting as carrier of teat cups 5 is also movable in height. Various embodiments of such a milking robot have been known for some time and all of them have the capability to position a robot arm provided with teat cups under a cow's udder and that in such a way that by moving upward either each of the teat cups or the joint teat cups, and in case of the latter at least the outer end of the robot arm at the same time then, said teat cups are connectable to the teats of the animal's udder. The robot arm 4 is also provided with a cleaning device 6 for cleaning these teats. The robot arm 4 on which the teat cups 5 and the cleaning device 6 are installed, is rotatable about its longitudinal axis, supported by a bearing device 7 at the end of a robot arm 8 capably of swinging in elevation. In a plane perpendicular to the axis of rotation of the robot arm 4, the teat cups 5 and the cleaning device 6 according to the invention are situated at an angle of 120 degrees with respect to each other, so that by 120 degrees rotation of the robot arm 4 about its longitudinal axis either the teat cups 5 or the cleaning device 6 can be directed upward into a position where the teat cups 5 are connectable to the udder's teats or the cleaning device 6 is connectable to the udder in its entirety. Rotation of the teat cups 5 or the cleaning device 6 is by means of a reversing motor. Obviously, this can also be achieved by means of e.g. a lever gear under hydraulic control. The device 6 is provided with cleaning members 10 through 13 capable of operating in at least two different positions, which positions are obtained by e.g. by rotation through approximately 90 degrees about an upward axis 14. A cleaning operation in two or more positions is achieved here by arranging the cleaning members in a bowl 15, said bowl 15 being rotatable in a bearing in the robot arm 4 by means of a bottom end part in the form of a shaft 16. The bowl 15 is driven to rotate about the axis 14 by means of a lever gear 17 and a control cylinder 18. The cleaning members comprise for every two teats a pair of brushes 10, 11 and 12, 13, with one brush of a pair, 11 and 12 respectively, being arranged in between the pairs of teats, the other, 10 and 13 respectively, on the exterior of a relevant pair of teats. In other words, the cleaning members comprise brushes 10 through 13 being driven during operation such that a teat, or more properly speaking, a pair of teats is cleaned on two sides by these brushes.

The brushes 10 and 11 as well as the brushes 12 and 13 are rotatable in mutually opposite directions and that such that the brushes are movable along a teat or pair of teats from top to bottom. Consequently, the dirt is removed along the teats in downward direction. The brushes 10 to 13 are rotatable about respective, substantially horizontal shafts 19 to 22 and are driven by means of a motor 23 and gear wheels 24 to 27 provided on said shafts. The brushes 10 and 13 are larger in diamater than the brushes 11 and 12. As the corresponding gear wheels 24 and 27 on the shafts 19 and 22 are larger than the gear wheels 25 and 26 on the shafts 20 and 21, the brushes 11 and 12 are driven at a higher speed than the brushes 10 and 13. The brushes 10 to 13 can be hairy and be provided with synthetic fibres; but it is also possible to construct the cleaning members 10 and 13 as brushes, whilst the cleaning members 11 and 12 are made from a plurality of substantially round textile disks. Whether the cleaning members 11 and 12 comprise brushes or rotary textile disks, in both cases the cleaning members will engage each other. In other words, the shafts 20 and 21 are at an interval which is smaller than the diameter of one of the cleaning members. The bowl 15 housing the cleaning members 10 through 13 is provided with flexible edges 28, so that suitable sealing of the bowl 15 around the animal's udder is obtainable.

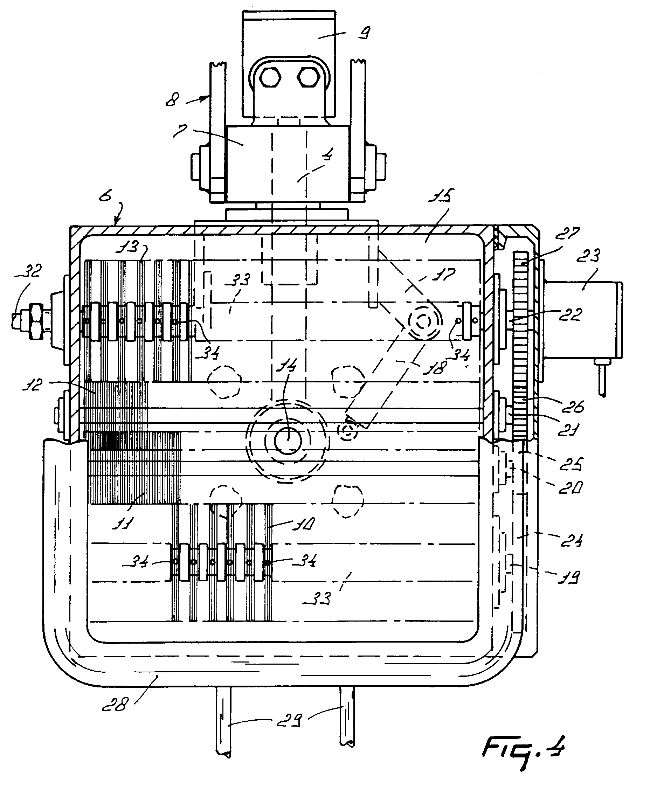

A cleaning liquid is used for cleaning the animal's teats. The implement is therefore provided with means for the supply of a liquid, with the aid of which means said liquid is supplied to the periphery of a cleaning member. As to these cleaning liquid supply means, only the line connector 29 on the bowl 15 is depicted in Figures 3 and 4. The cleaning liquid supplied to the cleaning members 10 through 13 is guided along the teats through the fact that a certain liquid level is maintained in the bowl 15, whilst cleaning liquid is swept along by the cleaning members 10 to 13 when rotating. The liquid is drained off through an outlet in the shaft-like bottom end 16 of the bowl 15 and a discharge hose 30. A sensor 31 is provided at the foot of the shaft-like bottom end 16 of the bowl 15, said sensor being capable of establishing the extent of contamination of the cleaning liquid. In principle, the supply of liquid through the length of line 29 on the bowl 15 and its discharge through the bottom end 16 of the bowl 15 and the discharge hose 30 lasts until it has been established by means of sensor 31 that the contamination of the cleaning liquid has only come below a defined level. It is then assumed that the animal's teats have been cleaned sufficiently, which permits the robot arm to be moved downward and the bowl 15 to be removed subsequently by rotation about the longitudinal axis of the robot arm 4 and the teat cups 5 to be put in the position straight under the animal's teats, so that, after the robot arm 4 has been moved upward and the teat cups 5 have been connected to the teats, the process of milking can take place.

Nevertheless, it may be desirable to have a process of drying performed in between wet cleaning and milking. The implement is therefore also provided with means for the supply of drying air, with the aid of which means drying air may be supplied to one or several teats. As to these drying air supply means, only the line connector 32 on the bowl 15 is depicted in Figure 4. It is advantageous to supply the drying air through a cleaning member; in Figure 4, drying air is supplied through shafts 19 and 22, being hollow shafts in the form of tubes 33, of the cleaning members 10 and 13. These tubes are then provided with radial apertures 34. By combining this tubular construction with a relatively high rotary speed of the cleaning members it is achieved that cleaning liquid present in the relevant cleaning members is expelled outward by the centrifugal effect. To be able to have the cleaning process and the subsequent milking process performed fully automatically, there are provided means for determining the positions of the teats, enabling the robot arm 4 to be positioned under the animal such that the bowl 15 is easily and correctly connectable to the animal's udder. After the cleaning process, when the bowl 15 is moved downward and turned away and, subsequently, the teat cups 5 are put under the teats of the animal's udder, a slight adjustment to the robot arm 4 is made, if necessary, in order to ensure that the teat cups 5 are connectable. The positioning means for this purpose are usually the same as those through which the bowl 15 is positioned under the udder, although the requirements to be imposed on the positioning of the teat cups 5 under the teats are more severe than those for the positioning of the bowl 15 only. The implement according to the invention furthermore comprises a computer with process control means including said positioning means, with the aid of which the cleaning members are connectable to the animal's udder, the cleaning liquid is supplied and the cleaning process is performed, whilst also with the aid of the sensor 31 the contamination of the cleaning liquid is determined, whereas, when the contamination has come below a defined level, the cleaning process is stopped and the milking process is started.

## Claims

1. An implement for cleaning teats of milk-producing animals, such as cows, with a robot arm (8) capable of carrying a cleaning device (6) which can be brought under the udder of an animal in order to clean the teats of the animal, means (29) to supply a cleaning liquid to said cleaning device (6) and a computer with means for process control, with the aid of which computer the cleaning device (6) can be brought under the animnal's udder and the cleaning process of the teats is performed by supplying the cleaning liquid, characterized in that there is provided a sensor (31) capable of establishing the extent of contamination of the cleaning liquid, with the cleaning process of the teats being terminated and the milking process being started when, with the aid of said sensor (31), it has been established that the contamination of the cleaning liquid has come below a defined level.

2. An implement as claimed in claim 1, characterized in that the cleaning device (6) is provided with cleaning members (10 - 13) which are operative in at least two different positions.

3. An implement as claimed in claim 2, characterized in that the cleaning members (10 - 13) are operative in two positions by rotation through approximately 90 degrees about an axis (14) directed upwardly.

4. An implement as claimed in claim 2 or 3, characterized in that the cleaning members (10 - 13) comprise at least two brushes (10, 13) driven during operation such that a teat is cleaned on two sides by these brushes (10, 13).

5. An implement as claimed in claim 4, characterized in that the brushes (10, 13) are rotatable in opposite directions.

6. An implement as claimed in claim 4 or 5, characterized in that the brushes (10, 13) are movable from top to bottom along a teat.

7. An implement as claimed in any one of claims 4 to 6, characterized in that each of the brushes (10, 13) is rotatable about a substantially horizontal axis (19, 22).

8. An implement as claimed in any one of claims 4 to 7, characterized in that the brushes (10, 13) are of different diameters.

9. An implement as claimed in any one of claims 4 to 8, characterized in that the brushes (10, 13) are capable of being motor-driven.

10. An implement as claimed in any one of claims 4 to 9, characterized in that the brushes (10, 13) have a relatively high rotary speed.

11. An implement as claimed in any one of claims 4 to 9, characterized in that the brushes (10, 13) are hairy.

12. An implement as claimed in any one of claims 4 to 11, characterized in that the brushes (10, 13) are provided with synthetic fibres.

13. An implement as claimed in any one of claims 4 to 12, characterized in that at least one of the brushes (10, 13) comprises one or several approximately round textile disks.

14. An implement as claimed in any one of claims 2 to 13, characterized in that the cleaning members (10 - 13) are provided with rotary textile disks.

15. A method of cleaning teats of milk-producing animals, such as cows, whereby cleaning members are automatically connected to the animal's udder, after which these cleaning members perform a rotary movement along the teats, with a sensor measuring the contamination of the cleaning liquid, whereas, when the contamination thereof has come below a defined level, the supply of cleaning liquid is turned off and the teats are dried by means of drying air, whereafter teat cups are connected to the animal's teats and the milking process is performed.

## Patentansprüche

1. Vorrichtung zum Reinigen der Zitzen von milchgebenden Tieren, wie z. B. von Kühen, mit einem Roboterarm (8), an dem eine Reinigungsvorrichtung (6) abzustützen ist, die zum Reinigen der Zitzen eines Tieres unter das Euter des Tieres zu bewegen ist, einer Vorrichtung (29) zum Zuführen von Reinigungsflüssigkeit zu der Reinigungsvorrichtung (6) sowie einem Computer mit Programmsteuerung, mittels der die Reinigungsvorrichtung (6) unter das Euter des Tieres zu bewegen ist und das Reinigen der Zitzen durch Zuführen der Reinigungsflüssigkeit durchgeführt wird,
dadurch gekennzeichnet, daß ein Sensor (31) vorgesehen ist, mittels dessen der Grad der Verschmutzung der Reinigungsflüssigkeit zu ermitteln ist, wobei das Reinigen der Zitzen beendet und der Melkvorgang gestartet werden, wenn mittels des Sensors (31) festgestellt worden ist, daß die Verschmutzung der Reinigungsflüssigkeit einen vorgegebenen Wert unterschritten hat.

2. Vorrichtung nach Anspruch 1,
dadurch gekennzeichnet, daß die Reinigungsvorrichtung (6) Reinigungselemente (10-13) aufweist, die in mindestens zwei verschiedenen Positionen wirksam sind.

3. Vorrichtung nach Anspruch 2,
dadurch gekennzeichnet, daß die Reinigungselemente (10-13) durch Drehen um etwa 90 Grad um eine aufwärts gerichtete Achse (14) in zwei Positionen wirksam sind.

4. Vorrichtung nach Anspruch 2 oder 3,
dadurch gekennzeichnet, daß die Reinigungselemente (10-13) mindestens zwei Bürsten (10, 13) aufweisen, die im Betrieb derart angetrieben sind, daß eine Zitze von diesen Bürsten (10, 13) auf zwei Seiten gereinigt wird.

5. Vorrichtung nach Anspruch 4,
dadurch gekennzeichnet, daß die Bürsten (10, 13) gegensinnig drehbar sind.

6. Vorrichtung nach Anspruch 4 oder 5,
dadurch gekennzeichnet, daß die Bürsten (10, 13) von oben nach unten an einer Zitze entlangzubewegen sind.

7. Vorrichtung nach einem der Ansprüche 4 bis 6,
dadurch gekennzeichnet, daß jede Bürste (10, 13) um eine im wesentlichen horizontal ausgerichtete Achse (19, 22) drehbar ist.

8. Vorrichtung nach einem der Ansprüche 4 bis 7,
dadurch gekennzeichnet, daß die Bürsten (10, 13) unterschiedliche Durchmesser haben.

9. Vorrichtung nach einem der Ansprüche 4 bis 8,
dadurch gekennzeichnet, daß die Bürsten (10, 13) motorisch anzutreiben sind.

10. Vorrichtung nach einem der Ansprüche 4 bis 9,
dadurch gekennzeichnet, daß die Bürsten (10, 13) eine relativ hohe Rotationsgeschwindigkeit haben.

11. Vorrichtung nach einem der Ansprüche 4 bis 9,
dadurch gekennzeichnet, daß die Bürsten (10, 13) mit Naturborsten versehen sind.

12. Vorrichtung nach einem der Ansprüche 4 bis 11,
dadurch gekennzeichnet, daß die Bürsten (10, 13) mit Kunststoff-Borsten versehen sind.

13. Vorrichtung nach einem der Ansprüche 4 bis 12,
dadurch gekennzeichnet, daß mindestens eine der Bürsten (10, 13) mit einer oder mehreren in etwa runden Textilscheiben versehen ist.

14. Vorrichtung nach einem der Ansprüche 2 bis 13,
dadurch gekennzeichnet, daß die Reinigungselemente (10-13) mit rotierenden Textilscheiben versehen sind.

15. Verfahren zum Reinigen der Zitzen von milchgebenden Tieren, wie z. B. von Kühen,
bei dem Reinigungselemente automatisch an das Tiereuter angeschlossen werden und anschließend eine Drehbewegung entlang den Zitzen ausführen, und bei dem ein Sensor die Verschmutzung der Reinigungsflüssigkeit mißt, wobei die Zufuhr von Reinigungsflüssigkeit beendet und die Zitzen mittels Trocknungsluft getrocknet werden, wenn die Verschmutzung der Reinigungsflüssigkeit einen vorgegebenen Wert unterschritten hat, worauf die Zitzenbecher an die Tierzitzen angeschlossen werden und der Melkvorgang durchgeführt wird.

## Revendications

1. Appareil pour nettoyer les trayons d'animaux laitiers, tels que des vaches, avec un bras de robot (8) capable de porter un dispositif nettoyeur (6) pouvant être amené sous le pis d'un animal pour nettoyer les trayons de l'animal, des moyens (29) pour débiter un liquide de nettoyage audit dispositif nettoyeur, et un ordinateur avec des moyens de commande de processus, à l'aide duquel ordinateur le dispositif nettoyeur (6) peut être amené sous le pis de l'animal, et l'opération de nettoyage des trayons est exécutée en débitant le liquide de nettoyage,
**caractérisé** en ce qu'il est prévu un capteur (31) capable d'établir le degré de contamination du liquide de nettoyage, l'opération de nettoyage des trayons étant terminée et l'opération de traite étant mise en route quand il a été établi, à l'aide dudit capteur (31) que la contamination du liquide de nettoyage est descendue au dessous d'un niveau défini.

2. Appareil selon la revendication 1, caractérisé en ce que le dispositif nettoyeur (6) est muni d'organes nettoyeurs (10 - 13) qui peuvent fonctionner en au moins deux positions différentes.

3. Appareil selon la revendication 2, caractérisé en ce que les organes nettoyeurs (10 - 13) peuvent fonctionner endeux positions par rotation sur environ 90 degrés autour d'un axe (14) dirigé vers le haut.

4. Appareil selon le revendication 2 ou 3, caractérisé en ce que les organes nettoyeurs (10 - 13) comprennent au moins deux brosses (10, 13) entraînées pendant leur fonctionnement de telle sorte qu'un trayon est nettoyé sur deux côtés par ces brosses (10, 13).

5. Appareil selon la revendication 4, caractérisé en ce que les brosses (10, 13) sont rotatives dans des sens opposés.

6. Appareil selon la revendication 4 ou 5, caractérisé en ce que les brosses (10, 13) sont mobiles de haut en bas le long d'un trayon.

7. Appareil selon l'une quelconque des revendications 4 à 6, caractérisé en ce que chacune des brosses (10, 13) est rotative autour d'un axe (19, 22) sensiblement horizontal.

8. Appareil selon l'une quelconque des revendications 4 à 7, caractérisé en ce que les brosses (10, 13) ont des diamètres différents.

9. Appareil selon l'une quelconque des revendications 4 à 8, caractérisé en ce que les brosses (10, 13) sont capables d'être entraînées par un moteur.

10. Appareil selon l'une quelconque des revendications 4 à 9, caractérisé en ce que les brosses (10, 13) ont une vitesse de rotation relativement élevée.

11. Appareil selon l'une quelconque des revendications 4 à 9, caractérisé en ce que les brosses (10, 13) sont couvertes de poils.

12. Appareil selon l'une quelconque des revendications 4 à 11, caractérisé en ce que les brosses (10, 13) sont garnies de fibres synthétiques.

13. Appareil selon l'une quelconque des revendications 4 à 12, caractérisé en ce qu'au moins une des brosses (10, 13) comprend un ou plusieurs disques textiles approximativement ronds.

14. Appareil selon l'une quelconque des revendications 2 à 13, caractérisé en ce que les organes nettoyeurs (10 - 13) sont munis de disques textiles rotatifs.

15. Procédé de nettoyage des trayons d'animaux laitiers, tels que des vaches, dans lequel des organes de nettoyage sont reliés automatiquement au pis de l'animal, après quoi ces organes de nettoyage exécutent un mouvement rotatif le long des trayons, avec un capteur mesurant la contamination du liquide de nettoyage, tandis que, quand la contamination de ce liquide est descendue en dessous d'un niveau défini, l'alimentation en liquide de nettoyage est arrêtée et les trayons sont séchés au moyen d'air de séchage, après quoi des godets de trayons sont reliés aux trayons de l'animal et l'opération de traite est exécutée.
